Europäisches Patentamt

European Patent Office

Office européen des brevets

(19)

(11) **EP 0 518 716 B1**

(12) **FASCICULE DE BREVET EUROPEEN**

(45) Date de publication et mention
de la délivrance du brevet:
**24.04.1996 Bulletin 1996/17**

(51) Int. Cl.$^6$: **B62D 5/04**

(21) Numéro de dépôt: **92401420.2**

(22) Date de dépôt: **25.05.1992**

(54) **Dispositif de direction assistée électrique pour véhicule**

Elektrische Hilfskraftlenkvorrichtung für ein Fahrzeug

Electric power steering device for a vehicle

(84) Etats contractants désignés:
**DE ES FR GB IT**

(30) Priorité: **29.05.1991 FR 9106476**

(43) Date de publication de la demande:
**16.12.1992 Bulletin 1992/51**

(73) Titulaire: **VALEO SYSTEMES D'ESSUYAGE**
**F-78180 Montigny-Le-Bretonneux (FR)**

(72) Inventeur: **Desrus, Dany**
**F-94260 Fresnes (FR)**

(74) Mandataire: **Gamonal, Didier**
**Valeo Management Services**
**Sce Propriété Industrielle**
**2, rue André Boulle**
**B.P. 150**
**F-94004 Créteil (FR)**

(56) Documents cités:
**EP-A- 0 247 736**          **EP-A- 0 276 005**
**DE-A- 4 006 683**          **FR-A- 2 613 887**
**GB-A- 2 145 678**          **GB-A- 2 177 358**
**GB-A- 2 186 242**          **GB-A- 2 226 285**
**US-A- 4 621 327**          **US-A- 4 751 978**
**US-A- 4 771 843**          **US-A- 4 809 173**
**US-A- 4 834 202**          **US-A- 4 972 133**

• **PATENT ABSTRACTS OF JAPAN, vol. 12, no. 116**
**(M-684), 13 avril 1988**

## Description

La présente invention concerne un dispositif de direction assistée électrique pour véhicule. Plus particulièrement, mais non exclusivement, l'invention concerne un dispositif de direction assistée électrique de parking. En particulier, un tel dispositif ne fonctionne que pendant les périodes où le véhicule se déplace à faible vitesse (par exemple moins de 30 km/H).

Dans l'art antérieur, on connaît déjà des dispositifs de direction assistée qui comportent une source d'énergie mécanique d'assistance qui entre en action quand le dispositif de commande reçoit un signal représentatif d'un effort du conducteur sur le volant de braquage du véhicule.

De tels dispositifs peuvent être de type hydraulique, pneumatique ou plus récemment électrique. La présente invention se rapporte exclusivement à des dispositifs de direction assistée dont la source d'énergie mécanique d'assistance est constituée par un moteur électrique.

De tels dispositifs peuvent être actifs pendant tout le temps de fonctionnement du véhicule. Ils peuvent aussi être actifs sur les quatre roues dans le cas de véhicules à quatre roues directrices. Cependant, ainsi qu'il sera exposé plus en détails ci-dessous, la présente invention trouve application de façon préférée seulement sur des directions pour véhicules à roues avant directrices.

La diffusion de la technologie des directions assistées électriques est relativement lente à cause de deux paramètres concurrents qui limitent son extension. Ce sont principalement le coût des composants et l'exigence élevée de fiabilité.

En effet, dans une direction assistée électrique permanente, le moteur électrique est sollicité en permanence. De ce fait, il subit des contraintes mécaniques, électriques et thermiques qui peuvent être temporairement très élevées. Il faut donc en général surdimensionner un tel moteur.

D'autre part, l'exigence de fiabilité est toujours maximale sur les fonctions de sécurité du véhicule, dont la direction assistée fait partie.

Or, du fait que les directions assistées non électriques sont en général permanentes, les directions assistées électriques que l'on tente de diffuser sont elles aussi permanentes. Cependant, le produit final est toujours de prix élevé.

Pour cette raison, il est proposé dans le document EP 0 276 005 (voir également le EP-A-0 247 736), conforme au préambule de la revendication 1, un dispositif de commande de direction assistée électrique qui est active dans les situations de conduite où une assistance au braquage est la plus utile.

Ce sont en particulier les moments où le conducteur réalise des manoeuvres à faible vitesse de déplacement du véhicule ; ou celles dans lesquelles il exerce pendant un instant très bref des efforts importants.

Dans un tel système, un dispositif d'embrayage commandable est interposé entre un moteur électrique d'assistance et la colonne de direction du véhicule. L'utilisation intensive de l'assistance peut provoquer une panne, tel qu'un court-circuit ou un circuit ouvert dans le dispositif d'embrayage. Si une telle situation ne peut être décelée à temps, certains composants du système peuvent être endommagés voire détruits.

Afin de porter remède à cet inconvénient de l'état de la technique, la présente invention concerne un dispositif de commande pour direction assistée électrique, comportant des moyens de surveillance de l'état de bon fonctionnement ou de disfonctionnement de l'embrayage tel que revendiqué dans la revendication 1.

D'autres caractéristiques et avantages de la présente invention apparaîtront plus clairement de la description et des dessins annexés qui sont :

- la figure 1 : un schéma représentant un dispositif de direction assistée électrique mettant en oeuvre le dispositif de commande de l'invention ;
- la figure 2 : le schéma d'un mode de réalisation d'un capteur de couple utilisé dans le mode de réalisation préféré ;
- la figure 3 : un schéma général du dispositif de commande de la figure 1 ;
- la figure 4 : un schéma d'un mode préféré de réalisation d'une alimentation stabilisée destinée au dispositif de commande de la figure 3 ;
- la figure 5 : un schéma d'un organe d'alimentation de puissance connecté à la sortie de l'alimentation représentée à la figure 4 ;
- la figure 6 : un schéma d'une interface avec un capteur de couple ;
- la figure 7 : un schéma des moyens commandés d'alimentation du moteur électrique d'assistance ;
- la figure 8 : un schéma d'une partie des moyens commandés d'alimentation du moteur électrique d'assistance de la figure 7 ;
- la figure 9 : un schéma d'une autre partie des moyens commandés d'alimentation du moteur électrique d'assistance de la figure 7 ;
- la figure 10 : un schéma d'une logique de commande des moyens commandés d'alimentation du moteur électrique d'assistance de la figure 7 ;
- la figure 11 : un schéma d'un circuit de test du courant traversant le moteur ;
- la figure 12 : un schéma d'un interface de la mesure d'une condition d'assistance ;
- la figure 13 : un graphe représentant les divers états possibles de la condition mesurée par le circuit de la figure 12 ;

- la figure 14 : un schéma d'une autre interface de mesure d'une condition d'assistance ;
- la figure 15 : un schéma d'un circuit de protection contre les surcharges thermiques ;
- la figure 16 : un schéma d'un circuit de commande de l'embrayage du dispositif d'assistance ;
- la figure 17 : un schéma d'une interface de transmission qui permet d'échanger des données entre le dispositif de commande de l'invention et une station de diagnostic par exemple, disposée dans un garage pour la réparation et l'entretien du dispositif.

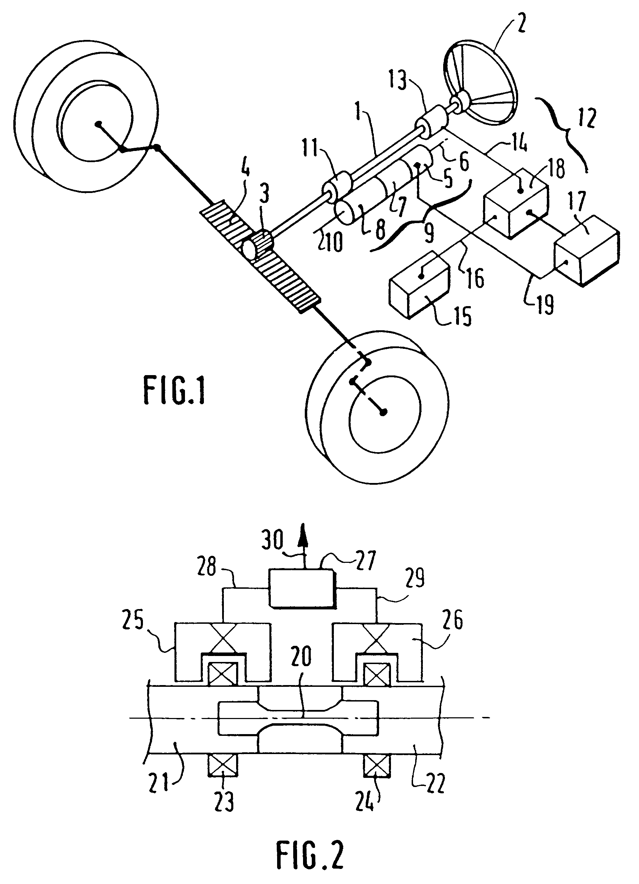

A la figure 1, on a représenté un dispositif de direction assistée électrique mettant en oeuvre le dispositif de commande de l'invention.

Un tel dispositif comporte une colonne de direction constituée par au moins un arbre 1 dont une première extrémité porte un volant 2 de braquage disposé à l'intérieur de l'habitacle (non représenté) du véhicule, et une seconde extrémité qui porte un pignon 3 d'attaque de la crémaillère de direction 4.

L'action de la crémaillère sur le braquage des roues avant directrices ne sera pas décrit plus avant, puisqu'il reprend le détail des opérations habituelles sur un véhicule même à direction non assistée.

Pour réaliser une direction assistée électrique, l'invention utilise un dispositif 9 d'assistance de direction qui comporte principalement un groupe motoréducteur avec son embrayage. Le groupe motoréducteur comporte principalement un moteur électrique 5 dont l'arbre d'entraînement 6 attaque un mécanisme d'embrayage 7, puis un réducteur 8. L'arbre de sortie 10 du réducteur 8 est relié par un moyen de couplage 11 à la colonne de direction, ou encore dans un autre mode de réalisation non représenté, à la crémaillère.

D'autre part, le dispositif de direction assistée comporte aussi un dispositif de commande 12 qui comporte notamment :

- des moyens de mesure 13 du couple de braquage produisant au moins un signal 14 indicatif du couple de braquage ;
- des moyens de mesure 15 d'au moins une condition d'assistance produisant au moins un signal 16 représentatif d'une condition d'assistance ;
- des moyens 17 d'alimentation contrôlée du moteur électrique 5 recevant des signaux de contrôle 19 ;
- des moyens de calcul 18 recevant les signaux 14 indicatif du braquage et 16 représentatif de la condition d'assistance et produisant lesdits signaux de contrôle 19 des moyens 17 d'alimentation contrôlée du dispositif d'assistance de direction.

Dans le mode de réalisation préféré, la colonne de direction porte les moyens de mesure du couple exercé par le conducteur. A la figure 1, ces moyens sont constitués par un capteur 13 du couple de braquage exerce par le conducteur sur le volant 2 pour faire tourner les roues avant directrices. Un exemple de réalisation d'un tel capteur peut être constitué, ainsi qu'il est représenté à la figure 2, autour d'une barre de torsion 20 étalonnée reliant deux parties 21 et 22 de la colonne de direction. L'extrémité de la partie 22 porte par exemple le volant de braquage, et l'extrémité de l'arbre 21 porte le pignon d'attaque de crémaillère. D'autre part, les deux extrémités en regard des arbres (ou parties d'arbre) 21 et 22 sont creusées de façon à recevoir les deux têtes d'extrémité d'une barre de torsion 20 convenablement étalonnée.

Les deux extrémités en regard des parties d'arbre de direction 21 et 22 portent des bagues, respectivement 23 et 24, sur lesquelles sont inscrites des marques, comme des marques optiques ou magnétiques, destinées à indiquer les positions relatives instantanées des deux bagues 23 et 24 à des têtes de lecture, respectivement 25 et 26. Quand les marques se déplacent devant les têtes de lecture elles génèrent des impulsions comme dans tout codeur de type incrémental par exemple.

Les signaux de mesure 28 et 29 des deux têtes de lecture 25 et 26 sont transmis à un circuit 27 de mesure du couple de braquage exercé sur le volant. Quand le conducteur exerce un effort de braquage sur le volant, le mouvement de rotation de la partie d'arbre 22 précède celui de la partie d'arbre 21 à cause de l'interposition de la barre de torsion 21. De ce fait, la différence des signaux de mesure représentatifs des deux mouvements de rotation, convenablement traités, est donc une mesure du couple de braquage.

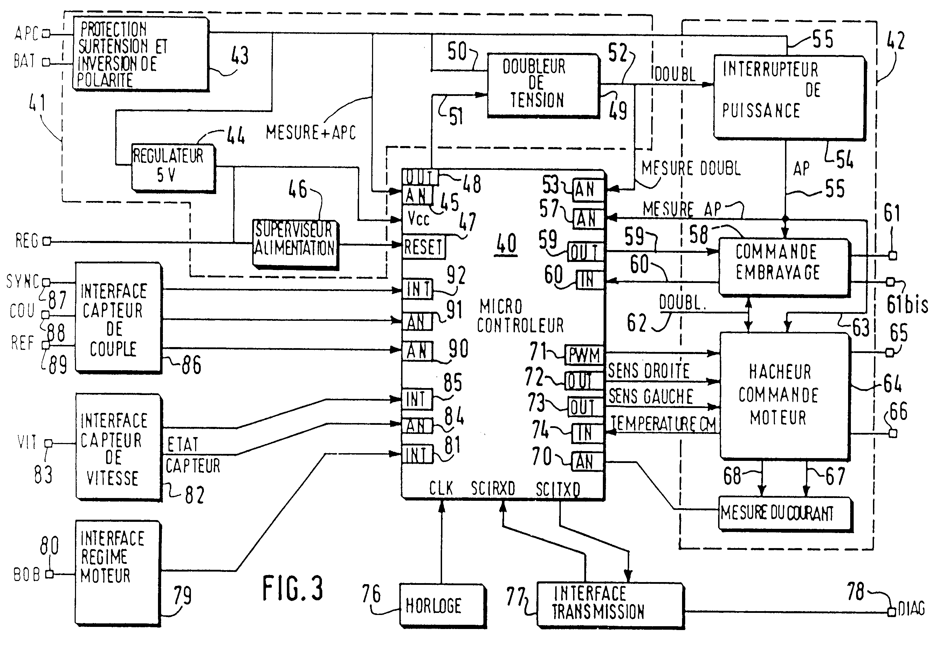

Le dispositif de calcul est représenté à la figure 3. Dans un mode préféré de réalisation, ce dispositif est intégré dans un module électronique, par exemple sous forme d'un circuit intégré monté avec ses composants de service sur un circuit imprimé monté dans un boîtier étanche. Le boîtier peut être fixé au carter du dispositif d'assistance de façon à constituer une unité. Cette disposition facilite tant le montage du véhicule que sa maintenance.

Le module électronique de commande de la direction assistée de parking est construit autour d'un microcontrôleur 40, par exemple du type à traitement des données sur "8 bits". Le microcontrôleur 40 reçoit les informations concernant le couple de direction et la condition d'assistance sur des entrées respectivement 90, 91, 92 d'une part, et 84, 85, d'autre part. Le microcontrôleur élabore selon un programme pré-enregistré dans une mémoire morte de programme les informations de commande nécessaires au dispositif d'assistance. De ce fait, il contrôle par des sorties 71 à 73 un hacheur de puissance à quatre transistors MOSFET 64. Le hacheur 64 comporte des sorties 65 et 66 alimentant le moteur électrique du dispositif d'assistance.

Le microcontrôleur 40 commande aussi :

- un interrupteur 58 par une entrée de commande 59 dont les sorties 61 et 61bis alimentent un organe d'activation de l'embrayage électromagnétique intégré dans le dispositif d'assistance ;
- un interrupteur général de puissance 54, préférentiellement réalisé par un relais électromagnétique, dont la sortie 56 fournit de l'énergie électrique au dispositif d'assistance. Ce relais permet de protéger le module électronique contre une inversion de polarité accidentelle des alimentations provenant du véhicule et référencées +APC et -BAT à la figure 3.

L'organe d'activation de l'embrayage est préférentiellement réalisé par une bobine électromagnétique dont le noyau mobile présente une extrémité destinée à actionner dans un premier sens (sortie 61) ou dans un second sens (sortie 61bis) la partie mobile de l'embrayage.

Le microcontrôleur 40 vérifie différentes conditions de fonctionnement du dispositif de direction assistée. A cette fin, le microcontrôleur 40 comporte :

- des moyens de surveillance 45 du niveau de la tension de la batterie, dont une borne est connectée par un câble non représenté et par l'intermédiaire du contact de mise en route du véhicule à une borne +APC dite de plus après contact,
- des moyens de surveillance 67 - 70 du courant traversant l'induit du moteur électrique d'assistance,
- des moyens de surveillance 73 de l'échauffement thermique du moteur électrique d'assistance,
- des moyens de surveillance 60 de l'état de l'embrayage (embrayé ou non, par exemple).

Le microcontrôleur 40 comporte d'autre part une sortie de commande 51 d'un doubleur de tension 49. Un tel montage élévateur de la tension issue de la batterie est indispensable pour la commande des interrupteurs constitués par des transistors à effet de champ de puissance du type MOSFET "HIGH SIDE" (au point chaud). De tels interrupteurs sont disposés chacun à la borne de plus haute tension de la charge qu'ils sont chargés de commuter. La tension obtenue est également appliquée à l'interrupteur de puissance.

Le circuit doubleur de tension 49, qui sera décrit plus loin, est donc connecté à la sortie d'un dispositif 43 de protection contre les surtensions. Le dispositif 43 reçoit le câble précité qui provient de l'interrupteur de mise en route du véhicule et de la borne positive de la batterie. Ce câble comporte deux liaisons : +APC et la liaison -BAT venant de la borne négative de la batterie.

Le microcontrôleur valide les informations reçues des capteurs. Il mémorise des défauts diagnostiqués en mémoire programmable EEPROM, qui sert de carnet d'entretien pour le garagiste.

Une interface de transmission bidirectionnelle permet le dialogue entre le microcontrôleur et une station de diagnostic (non représentée) pour permettre la lecture des défauts diagnostiqués mémorisés.

Dans un mode de réalisation, on a réalisé un circuit intégré spécifique à l'application, de façon à permettre la réduction de taille du module électronique et son incorporation au boîtier mécanique d'assistance, favorisant ainsi la réduction de l'encombrement, l'augmentation de la fiabilité et la réduction du coût de la fonction.

Le module électronique de commande de la direction assistée de parking assure deux fonctions principales :

- faire circuler dans l'induit du moteur électrique d'assistance un courant électrique dont le sens et l'amplitude sont déterminés en fonction de l'information du capteur de couple de direction,
- autoriser l'assistance en fonction de l'information vitesse véhicule et de l'état du dispositif de l'invention (fonction sécurité).

Les fonctions de contraintes du dispositif de l'invention sont :

- protéger les composants du système des risques de destruction liés à un usage trop intensif de l'assistance,
- ne pas contribuer à une décharge excessive de la batterie du véhicule,
- ne pas perturber le fonctionnement des autres équipements électriques du véhicule,
- se monter sur le boîtier mécanique d'assistance.

On a prévu un mode dégradé de fonctionnement du dispositif de l'invention dans les cas de défaut d'un composant, de décharge de la batterie ou d'échauffement limite du moteur.

Le mode dégradé peut être réalisé par le maintien à l'état passif de l'assistance. Le comportement de la direction est alors identique à celui d'une direction manuelle. Dans un mode de réalisation, le passage au mode dégradé s'accompagne de l'émission d'un signal d'alarme du conducteur. En effet, le dispositif d'assistance n'est pas connecté en permanence ni directement sur la colonne de direction. Entre la colonne de direction et le moteur électrique d'assistance, le dispositif d'assistance de direction comporte un embrayage commandé qui est actif quand le dispositif de commande émet un signal d'activation et qui est passif dans le cas contraire, c'est-à-dire, aussi bien quand le dispositif de commande envoie une commande de désactivation que dans le cas où une défaillance éteint le signal d'activation. Comme le volant de braquage reste toujours sur la colonne de direction, la défaillance du dispositif de direction assistée permet au conducteur de diriger le véhicule sans assistance.

Dans un mode de réalisation, on a utilisé un circuit TMS 370 C 850 de Texas Instruments qui comporte :

- une mémoire morte de 4 K octets ROM, avec une extension possible à 8 K octets ou 16 K octets,
- une mémoire vive de 256 octets RAM,
- une mémoire programmable de 256 octets EEPROM, ou une mémoire à contenu mémorisé sauvegardé à la coupure de l'alimentation du dispositif (RAM avec batterie Ni - Cd),
- 55 entrées/sorties,
- 16 convertisseurs analogique numérique 8 bits, 8 canaux,
- 3 entrées d'interruption,
- 2 horloges sur 16 bits permettant la génération d'un signal à rapport cyclique variable et de fréquence 20 kHz pour la commande du moteur,
- watchdog interne, qui est réalisé avec une horloge interne disponible,
- interface communication parallèle (SPI),
- interface communication série (SCI),

Le circuit intégré est activé par une horloge 20 Mégaherz. Il est encapsulé dans un boîtier 68 broches PLCC et sa température de fonctionnement est comprise entre -40°C et +120°C.

D'autres modes de réalisation utilisent un microcontrôleur de la même famille dans un boîtier 28 broches PLCC ayant les fonctionnalités nécessaires et suffisantes à l'application avec un gain de surface et de coût.

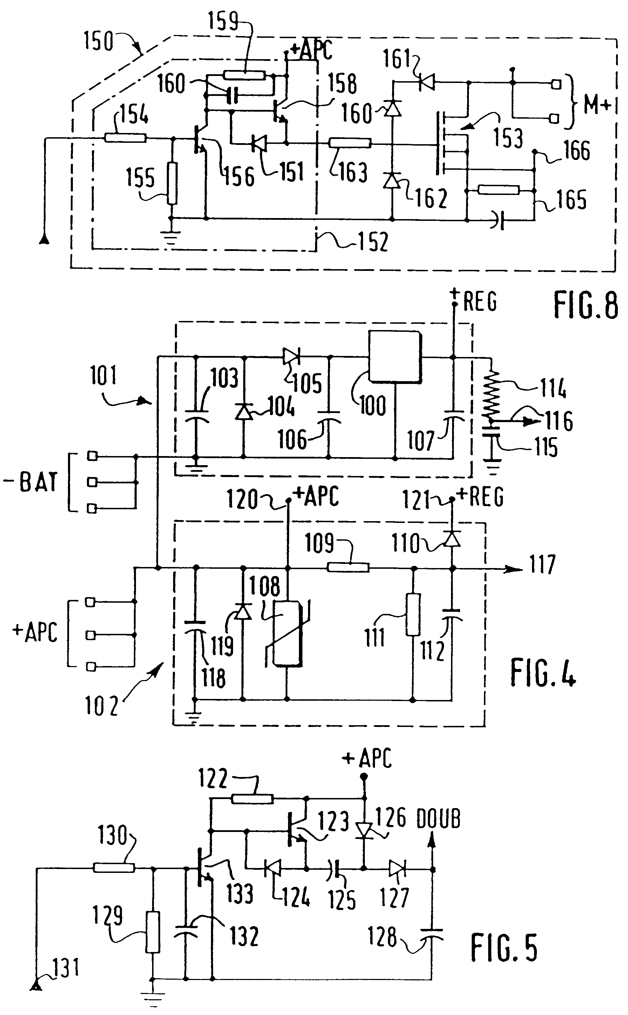

L'alimentation électrique est réalisée à partir d'une connexion sur la borne positive + après contact (+APC). Les moyens d'alimentation électriques comportent une alimentation stabilisée + REG, (du modèle pour circuits intégrés et électronique de conditionnement du capteur de couple). Dans un mode de réalisation préféré représenté à la figure 4, l'alimentation stabilisée est répartie en deux voies 101 et 102. Sur la voie 101, un régulateur d'alimentation 100 est connecté entre la borne +APC et la borne -BAT provenant du système d'alimentation électrique du véhicule. Le régulateur élabore une tension de sortie régulée + REG.

Le superviseur est réalisé par exemple avec un circuit TC 7705. La voie 101 comporte donc un fil connecté à la borne +APC, le fil étant connecté à un circuit comportant une capacité 103 et une diode 104 mise à la masse électrique et dont les points communs sont connectés à l'anode d'une diode 105. La cathode de la diode 105 est connectée à une première borne d'un condensateur 106 et à l'entrée principale du circuit intégré régulateur 100. La seconde borne du condensateur 106 est connectée à la masse.

La sortie du circuit intégré 100 est connectée à tous les points du module électronique marqués +REG et filtrée avec un condensateur 107 mis à la masse. D'autre part, la voie 101 comporte un circuit 114 - 116 constitué d'une résistance 114 et d'un condensateur 115, mis à la masse, et dont le point commun 116 est connecté à un superviseur d'alimentation relié à l'entrée de remise à l'état initial RESET du microcontrôleur 40. Ce superviseur permet de forcer la borne RESET de remise à l'état initial du microcontrôleur si l'alimentation + REG chute sous 4,5V.

La seconde voie 102 est connectée à l'entrée +APC provenant du système d'alimentation du véhicule et reçoit par une entrée 121 notée +REG, la tension régulée issue de la voie 101. La tension +APC provenant du véhicule est connectée à un circuit parallèle composé d'un condensateur 118, d'une diode 119 et d'une résistance variable 108, circuit destiné à bloquer les surtensions. La sortie 120 de ce circuit permet notamment de produire une tension +APC protégée des surtensions au reste du module électronique. D'autre part, la sortie 120 est connectée à une première borne d'une résistance 109 dont l'autre borne est connectée au point commun de l'anode d'une diode 110 dont la cathode est connectée à l'entrée +REG, et d'un condensateur 112 dont l'autre borne est connectée à la masse et à une résistance 111, elle aussi mise à la masse. Une prise de sortie 117 de ce circuit de sortie de la voie 102 est transmise à une entrée d'un convertisseur analogique- numérique interne au microcontrôleur 40 aux fins de surveillance de l'alimentation.

Le module électronique comporte donc une alimentation de puissance (pour le mécanisme d'embrayage et pour le moteur électrique d'assistance).

A partir de la tension fournie par la borne positive de la batterie, un interrupteur général de puissance 54 de type relais permet d'obtenir après le contact de démarrage du véhicule, une tension dite + APC. Le relais 54 est commandé par un élévateur de tension 49 de type pompe de charge.

Un exemple préféré de cet élévateur est contrôlé par un signal de fréquence à 3,3 kHz généré par le microcontrôleur et est représenté à la figure 5. Le circuit élévateur de tension du mode préféré de réalisation comporte une entrée 131 connectée à une horloge ajustable du microcontrôleur 40. Cette horloge ajustable génère un signal carré à 3,3 kHz pour activer un circuit dit de pompe de charge avec 2 diodes de doublage de tension. Un tel circuit comporte classiquement un circuit d'entrée constitué d'une résistance 130 connecté à la base d'un transistor 133. La base du transistor 133 est aussi connectée à un filtre constitué d'une capacité 132 en parallèle avec une résistance 129. Le filtre et l'émetteur du transistor 133 sont connectés à la masse électrique.

Le collecteur du transistor 133 est connecté à la base d'un transistor 123 dont le circuit base - collecteur est chargé par une résistance 122, le point commun entre le collecteur et la résistance 122 étant connecté à l'entrée +APC. Le circuit collecteur - émetteur du transistor 123 est muni d'une diode 126 qui fait partie de la pompe de charge, et dont la cathode est connectée à une borne d'un condensateur de charge 125 dont l'autre borne est connectée à l'émetteur du transistor 123.

Le circuit base - émetteur du transistor 123 est chargé par une diode 124. Le point commun de la diode 126 et du condensateur 125 est connecté à l'anode de la seconde diode de la pompe de charge, diode 127 dont la cathode est connectée à la sortie de doublage de tension DOUB et à un condensateur de charge 128 dont l'autre borne est connectée à la masse.

La tension élevée DOUB est nettement supérieure au + APC, et permet également la commande en tension des transistors MOSFET "HIGH SIDE" (au point chaud) du hâcheur 64 alimentant le moteur.

Le microcontrôleur mesure le niveau de la tension + APC pour interdire l'assistance au-dessous d'un premier seuil, par exemple de 10 V (risque de décharge de la batterie) et au-dessus d'un second seuil, par exemple de 16 V (risque d'échauffement rapide de l'embrayage et du moteur).

Le microcontrôleur contrôle le niveau du doubleur de tension et le niveau de l'alimentation de puissance pour détecter un défaut éventuel de l'interrupteur.

Le dispositif de commande selon l'invention comporte ensuite une interface de mise en forme des signaux échangés avec le capteur de couple décrit précédemment.

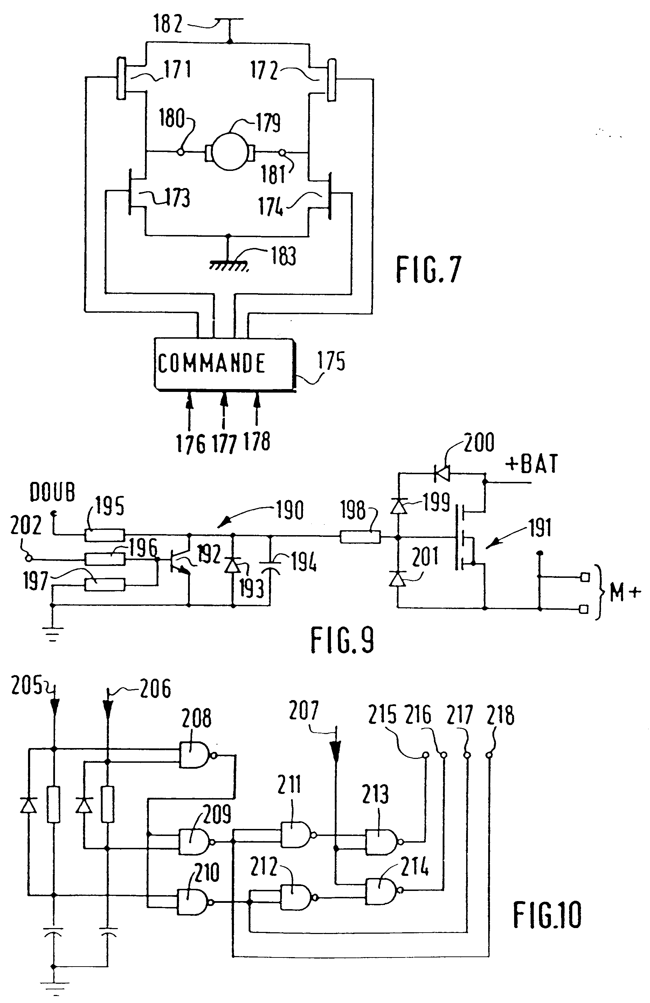

Cette interface, qui sert de tampon, est représentée à la figure 6. L'interface comporte un connecteur de liaison avec l'électronique installé sur le capteur de couple. Le connecteur comporte trois bornes d'entrée repérées COU, REF et SYN et transmet les signaux du conditionneur incorporé au capteur de couple. L'interface échange un signal de couple sinusoïdal COU dont le microcontrôleur 40 mesure l'amplitude par conversion analogique/ numérique, un signal de synchronisation SYN pour le déclenchement des conversions analogique/ numérique, et un signal de référence REF pour le module de conversion analogique/ numérique.

Le signal SYN est transmis à une entrée de conversion analogique numérique du microcontrôleur 40 par l'intermédiaire d'un circuit de mise en forme constitué de deux inverseurs successifs, qui, dans un exemple de réalisation préférée, sont réalisés avec des portes NON ET 140 et 141, dont les entrées sont reliées au signal d'entrée qui leur est appliqué.

D'autre part, le connecteur comporte aussi des bornes de sortie +REG et -BAT qui envoient de l'énergie électrique d'alimentation au capteur de couple sous le contrôle du microcontrôleur 40. Pour protéger les circuits, on a disposé des diodes 142, 143 et 144 entre une connection 145 au potentiel +REG local sur le module électronique et chacune des lignes qui arrivent aux bornes de signal SYNC, COU et REF. De plus, la ligne REF est filtrée par une cellule RC constituée d'une résistance 146 et d'un condensateur 147.

On va maintenant décrire le hâcheur 64.

A la figure 7, on a représenté un schéma de principe d'un hâcheur constitué par quatre interrupteurs commandés 171 à 174, par un circuit de commande 175 excité à l'aide des trois signaux de définition de sens direct 176, de sens inverse 177, et de rapport cyclique 178. Le signal de rapport cyclique est un signal de forme carrée par exemple, dont la largeur et la période sont définies en fonction des conditions d'assistance, principalement, en fonction de la valeur du couple exercé sur le volant par le conducteur.

Un étage logique interdit la commande simultanée des deux sens (en cas de défaut du microcontrôleur) donc un court-circuit de l'alimentation.

Une temporisation minimale de 50 millisecondes est imposée au changement de sens de la commande pour éviter un court-circuit transitoire de l'alimentation.

Une commande non découpée est appliquée aux transistors "high side" (au point chaud) (tension DOUB du doubleur) et le signal découpé aux transistors "low side" (au point froid).

Les grilles des transistors sont attaquées par des signaux qui seront décrits plus loin, et qui sont élaborés par une logique en fonction des trois signaux produits par le microcontrôleur 40 par ses sorties 71 à 73 sur la figure 3. Cependant, les deux transistors 171 et 172 des branches "hautes" du pont sont de forte puissance, tandis que les deux transistors 173 et 174 des branches "basses" du pont sont de puissance réduite.

On remarque que le moteur électrique 179 est connecté entre les bornes communes 180 et 181 du pont de transistors 171 à 174. De ce fait, selon que le courant circule entre les transistors 171 et 174 ou entre les transistors 172 et 173, le moteur 179 tourne dans un sens ou dans l'autre.

A la figure 8, on a représenté l'un des deux transistors de puissance 173 ou 174. En général, tout interrupteur commandable de puissance est convenable.

A la figure 8, l'interrupteur de puissance 150 comporte un circuit de commande 152 qui polarise la grille d'un transistor de puissance à effet de champ de type MOSFET 153.

Le circuit de commande comporte principalement deux transistors 156 et 158. La base du transistor 156 reçoit le signal de commande de la logique qui sera décrite à la figure 10 par un pont diviseur à résistances 154 et 155. L'émetteur du transistor 156 est connectée à la masse électrique. Le collecteur du transistor 156 est connectée d'une part, à la base du transistor 158, d'autre part à la cathode d'une diode 151 dont l'anode est connectée à l'émetteur du transistor

EP 0 518 716 B1

158, et à un circuit parrallèle constitué d'une résistance 159 et d'un condensateur 160 dont l'autre borne est connectée à la tension +APC positive. De plus, le collecteur du transistor 158 est aussi connecté à cette tension d'alimentation positive.

Le collecteur du transistor 158 est connecté par l'intermédiaire d'une résistance 163 au point commun entre l'anode d'une première diode 160 et la cathode d'une seconde diode 162, et à la grille du transistor de puissance 153. L'anode de la diode 162 est connectée à la masse électrique. La cathode de la première diode 160 est reliée à la cathode d'une troisième diode 161 dont l'anode est reliée au drain du transistor de puissance 153. Le drain du transistor 153 est la sortie référencée M+ à la figure 8, qui est connectée à l'une des bornes du moteur électrique d'assistance.

Les sources multiples du transistor 153 sont reliées par un filtre constitué par une résistance et une capacité en parallèle 165 à une borne d'un circuit de test du courant 166 traversant le moteur, circuit de test qui sera décrit plus loin.

A la figure 9, on a décrit l'un des deux interrupteurs des branches "supérieures" du hâcheur. L'interrupteur comporte un circuit de commande 190, dont l'entrée 202 reçoit un signal de commande en provenance de la logique qui sera décrite à la figure 10.

L'entrée 202 est transmise par une résistance 196 à la base d'un transistor de commande 192. Le circuit base - émetteur du transistor comporte une résistance 197 et le collecteur du transistor est chargé par l'intermédiaire d'une résistance 195 à la tension DOUB issue du circuit élévateur de tension.

La sortie du transistor 192 est transmise par un circuit parallèle comportant une diode en inverse 193 et une capacité 194 à une résistance 198. L'autre borne de la résistance 198 est connectée à la grille du transistor de puissance de type à effet de champ 191 par le point commun entre deux diodes 199 et 201. L'anode de la diode 201 est connectée à la source du transistor 191. La cathode de la diode 100 est connectée à la cathode d'une diode 200 dont l'anode est connectée d'une part à la tension positive +APC et d'autre part au drain du transistor 191.

La sortie, ici référencée M+ d'alimentation du moteur électrique est prise sur la source du transistor 191.

A la figure 10, on a représenté un circuit logique qui élabore à partir des trois signaux 205 de sens inverse, 206 de sens direct et 207 de rapport cyclique, signaux issus de et générés par trois sorties 71 à 73 du microcontrôleur 40 de la figure 3.

Chaque entrée de sens de rotation du moteur 205 et 206 est mise en forme par un circuit comportant une diode, une résistance et un condensateur, circuit représenté sans référence à la figure 10, et est composée dans une première porte NON ET pour former un oOU logique. La sortie de cette première porte 208 est transmise à la première entrée de deux portes NON ET 209 et 210, dont les secondes entrées sont respectivement connectées aux signaux de commande 205 et 206, remis en forme. Les sorties des deux portes NON ET 209 et 210 sont transmises à des inverseurs 211 et 212 dont les sorties sont composées avec le signal de rapport cyclique 207 sur des portes NON ET respectivement 213 et 214.

Les sorties 215 à 218 du circuit logique qui excite le hâcheur du dispositif selon l'invention sont donc respectivement :

- le signal 215 de mise en conduction du transistor de commande du sens inverse de rotation, signal issu de l'inverseur 209,
- le signal 216 de mise en conduction du transistor de commande du sens direct de rotation, issu de l'inverseur 210,
- le signal de commande 217 de mise en conduction du transistor de puissance, par exemple 171 de la figure 7,
- le signal de commande 218 de mise en conduction du transistor de puissance, par exemple 172 de la figure 7.

On va maintenant décrire le circuit de test du courant traversant l'induit du moteur. A la figure 8, le transistor de sortie de puissance 153 est un transistor MOS à effet de champ, dit MOSFET, dont les électrodes de source comportent un montage en miroir de courant, la sortie 166 de ce transistor permet donc de mesurer exactement le courant qui traverse le moteur électrique quand ce transistor débite du courant. Ainsi, selon la commande dans le sens direct ou inverse de rotation du moteur, commande 72 ou 73 issue du microcontrôleur 40, il est possible de surveiller le courant traversant les enroulements inducteurs. De ce fait, comme on peut connaître la tension instantanée appliquée au moteur, par la valeur du réglage du rapport cyclique selon la sortie 71 du microcontrôleur 40, il est possible d'évaluer en temps réel les paramètres de fonctionnement du moteur électrique depuis le microcontrôleur 40.

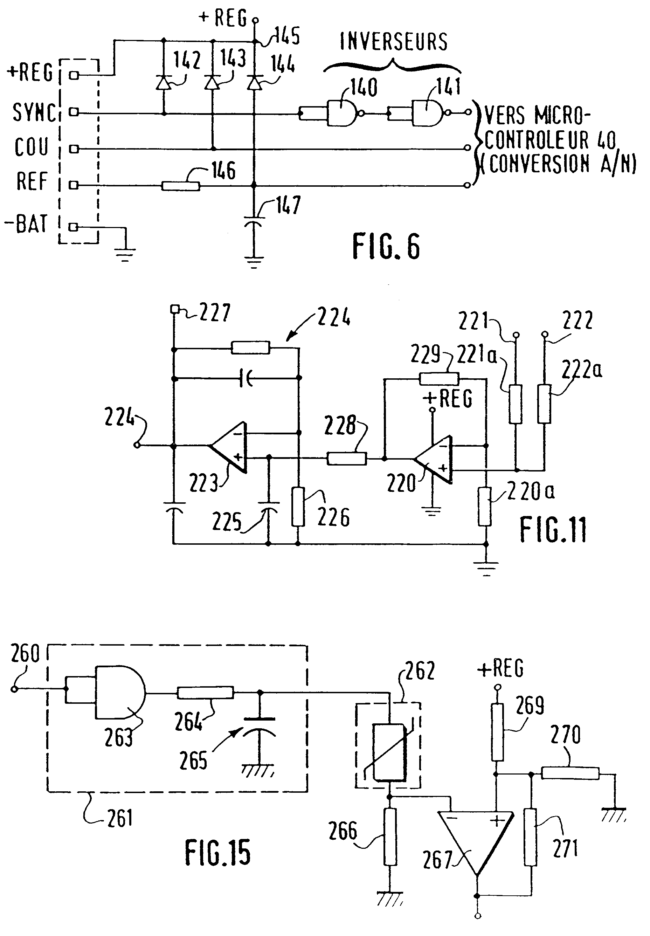

A la figure 11, on a représenté un montage dont les principaux éléments seront décrits ci-après. Un étage amplificateur 220 comporte deux entrées 221 et 222 provenant des deux électrodes de source des transistors de puissance du hâcheur 64. La sortie de l'amplificateur 220 est connectée à un étage constitué par un filtre actif 223 dont la sortie 224 est transmise à un port de conversion analogique/ numérique du microcontrôleur 40.

Le programme de test dans le microcontrôleur 40 comporte dans un mode préféré de réalisation, un test du moteur électrique en court circuit et un test du moteur électrique en circuit ouvert. En réponse aux résultats de test, le microcontrôleur 40 supprime les commandes de l'embrayage et de l'interrupteur de puissance. Le test du moteur en court circuit est réalisé par la mesure d'un courant supérieur au courant à rotor bloqué, valeur caractéristique du moteur électrique utilisé, préenregistrée dans une variable système inscrite dans la mémoire interne du microcontrôleur 40. De même, le test en circuit ouvert est effectué en absence de courant appliqué lors d'une commande moteur.

7

Dans un autre test de sécurité pratiqué dans un mode préféré de réalisation de l'invention, on exécute sur le microcontrôleur 40 un contrôle de l'état des transistors pour détecter l'éventuel court-circuit de l'un des transistors. Chaque transistor est équipé d'une résistance en parallèle entre drain et source. En l'absence de commande, les deux bornes du moteur doivent être à une tension moitié de celle de l'alimentation de puissance. Quand l'une des commandes au moins est active, l'une des bornes s'approche de la tension de puissance +AP et l'autre borne voit une tension de forme découpée qui reproduit le rapport cyclique auquel est soumis le hâcheur 64.

On peut détecter un court-circuit avant application de la commande et un court-circuit sur les transistors. Dans chaque cas de court-circuit, le microcontrôleur 40 exécute un ordre d'ouverture de l'interrupteur général 54.

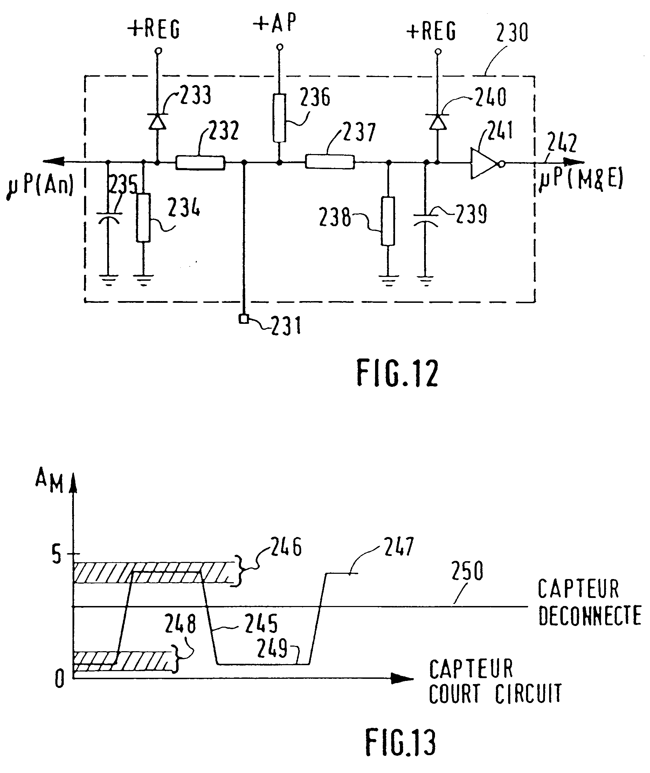

A la figure 12, on a représenté un autre interface de mise en forme d'un des signaux de condition d'assistance. Cette condition d'assistance est réalisée par la mesure de la vitesse réelle du véhicule.

Cette interface 230 est prévue pour un capteur type effet Hall en sortie de boîte de vitesses.

Elle réalise la mise en forme du signal carré [0 - 5] volts appliqué à une entrée d'interruption du microcontrôleur 40.

Le capteur de vitesse du véhicule est connecté au module électronique par une entrée 231 de l'interface 230. La tension transmise est transmise à une entrée de conversion analogique/ numérique An du microcontrôleur 40 par l'intermédiaire d'un circuit composé d'une résistance 232 connectée par l'intermédiaire d'une diode 233 à la tension positive régulée +REG d'une part, et à un circuit parallèle constitué d'une résistance 234 et d'une capacité 235.

D'autre part, la tension de mesure 230 est transmise à une autre entrée 242 du microcontrôleur 40. Pour celà, la tension 231 est transmise par une résistance 237, connectée à la tension +AP en sortie de l'interrupteur général 64 par une autre résistance 236, à un circuit parallèle constitué d'une résistance 238 et d'un condensateur 239, tous les deux mis à la masse d'un coté et à l'anode d'une diode 240 dont la cathode est connectée à la tension régulée +REG. Le point commun de la diode 240, du circuit parallèle 238, 239 et de la résistance 237 est relié à l'entrée d'un amplificateur inverseur 241, dont la sortie est connectée à la borne 242 précitée.

A la figure 13, on a représenté un diagramme An en fonction du temps des états possibles de la condition d'assistance liée à la vitesse du véhicule. La tension issue du capteur de vitesse du véhicule est de forme crénelée 245 et oscille entre environ 0 volts et 5 Volts.

Le microcontrôleur 40 admet une marge 248 pour le niveau bas 249, et une marge 246 pour le niveau haut 247.

Cependant, dans le cas où le rotor du capteur de vitesse de véhicule est bloqué, ou si le capteur est déconnecté (droite 250), il faut passer à une autre condition de surveillance.

La fiabilité de l'information vitesse doit être absolue pour garantir l'absence d'assistance au-dessus d'un seuil de vitesse réelle du véhicule.

Un contrôle du niveau de tension présente sur l'entrée capteur de vitesse permet :

- la détection d'absence du capteur (circuit ouvert) : l'entrée analogique voit un signal constant (2,9 V pour 12 V sur + APC),
- la détection de court-circuit du capteur : l'entrée analogique voit une tension nulle,
- la vérification de l'état électrique normal du capteur à effet Hall : l'entrée analogique voit un niveau de tension bas non nul ou un niveau de tension haut différent du niveau constant caractérisant l'absence du capteur.

Par ailleurs, un défaut mécanique de la partie tournante du capteur de vitesse peut conduire à une irrégularité du signal vitesse à vitesse réelle stabilisée. Une vérification de régularité est réalisée quand la vitesse est supérieure au seuil d'assistance (assistance passive).

En cas de blocage de la partie tournante (vitesse mesurée nulle avec une vitesse réelle non nulle), un signal de régime du moteur thermique (décrit plus loin) est surveillé par un logiciel pour confirmer le défaut du capteur vitesse : si le régime moteur varie notablement par rapport au régime de ralenti, l'assistance est coupée jusqu'à réapparition du signal vitesse.

De plus, une annulation très rapide du signal vitesse 231 est interprétée par le microcontrôleur 40 comme une rupture du capteur.

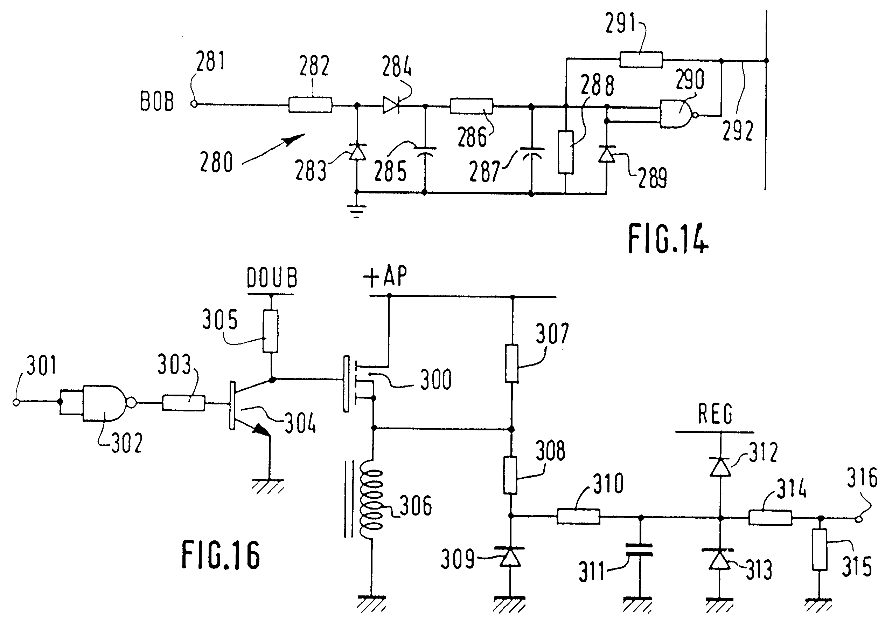

A la figure 14, on a représenté une interface du capteur de mesure du régime du moteur thermique du véhicule.

Un trigger de Schmitt réalise la mise en forme de la tension aux bornes du capteur d'allumage, non représenté et dont la sortie est connectée à l'entrée 281 de l'interface 280.

Le signal de réception est transmis à un circuit comprenant une résistance 282 dont l'autre borne est connectée à l'anode d'une première diode 284 et à la cathode d'une seconde diode 283. L'anode de la seconde diode 283 est connectée à la masse et la cathode de la première diode 284 est connectée au point commun entre une résistance 286 et une capacité 287 dont l'autre borne est mise à la masse. L'autre borne de la résistance 286 est connectée à un circuit parallèle comprenant une capacité 287 et un pont de résistances 288 et 289, dont le point milieu est connecté à un amplificateur inverseur 290.

L'entrée de l'amplificateur inverseur 290 est aussi connectée à la masse par une diode 289. La sortie de l'amplificateur inverseur 290 est connectée par une borne 292 à une entrée d'interruption du microcontrôleur 40 pour traitement par une routine de traitement d'interruption.

L'autre borne de la résistance 291 est aussi connectée à la sortie 292.

A la figure 16, on a représenté un schéma d'un circuit de commande de l'embrayage.

Cette commande est réalisée par un transistor MOS 300 qui limite la chute de tension à 0,5 V pour I = 0,2A. Une information logique d'état en sortie 316 de l'ensemble comportant la commande et la charge est restituée au microcontrôleur 40, permettant de diagnostiquer la charge en circuit ouvert ou le court-circuit de l'interrupteur de commande avant de commander l'embrayage et diagnostiquer le court-circuit de la charge dès l'établissement de la commande ou en cours de fonctionnement.

Le fonctionnement du dispositif de commande est résumé dans la table de vérité suivante :

| Entrée commande | Sortie puissance | Info état | Diagnostic |
|---|---|---|---|
| L | L | L | Fonctionnement normal |
| H | H | H | |
| L | L | H | circuit ouvert charge |
| H | H | H | |
| L | H | H | Interrupteur en court-circuit |
| H | H | H | |
| L | L | L | Charge en court-circuit |
| H | L | L | |

Le circuit de la figure 16 comporte principalement un amplificateur inverseur 302 qui reçoit sur son entrée 301 le signal d'embrayage 301 provenant du microcontrôleur en fonction des conditions d'assistance. La sortie de l'amplificateur 302 est transmise par une résistance 303 à la base d'un transistor bipolaire 304 d'attaque dont le collecteur est relié par une résistance 305 à la tension DOUB sortie de l'élévateur de tension. L'émetteur du transistor 304 est mis à la masse. La sortie du montage d'attaque est prise sur le collecteur du transistor 304 et est transmise à la grille du transistor MOS 300 dont le drain est connecté à la tension positive +AP de sortie de l'interrupteur général 54. La commande d'embrayage est prise sur la source du transistor MOS 300 et débite du courant lors de son activation dans la bobine 306 de l'électroaimant d'activation temporaire de l'embrayage interposé entre le moteur électrique et le réducteur du dispositif d'assistance.

Le circuit de la figure 16 se complète d'un montage de surveillance des courts-circuits et autres disfonctionnements rappelés plus haut.

La commande en sortie de source du transistor 300 est transmise à un pont diviseur de résistances 307, 308 dont l'une des bornes est connectée à la tension +AP de sortie de l'interrupteur général et l'autre borne est connectée à la cathode d'une diode 309.

L'anode de la diode 309 est connectée à la masse.

La cathode de la diode 309 est connectée à un filtre RC constitué d'une résistance 310 et d'une capacité 311 dont la sortie est connectée entre deux diodes 312 et 313 d'adaptation des niveaux à des niveaux logiques TTL par exemple.

Le point commun des deux diodes 312 et 313 est connecté à un pont diviseur de résistances 314 et 315 dont le point milieu est connecté à une sortie 316 connectée au microcontrôleur 40 pour surveiller l'état de l'embrayage par une routine adaptée.

A la figure 15, on a représenté un circuit de protection contre les surcharges thermiques du moteur électrique d'assistance. Le signal 71 de rapport cyclique est transmis à l'entrée 260 de l'interface. L'entrée 260 est fournie à un circuit de mise en forme constitué d'un amplificateur 263 dont la sortie est transmise à un filtre RC constitué d'une résistance 264 et d'une capacité 265 et dont la sortie est connectée à une première borne d'une résistance variable avec la température 262. D'une manière générale, l'interface de la figure 15 comporte un moyen de mesure de la température du moteur électrique.

Le radiateur du pont de puissance du hâcheur 64 est muni d'un contrôle de température de la commande moteur réalisé par la thermistance CTN à laquelle est appliquée une tension proportionnelle au rapport cyclique du signal découpé.

La variation de résistance de la thermistance dépend à la fois de la température ambiante au niveau du boîtier de commande et du temps de passage et du niveau de courant dans le moteur. Un comparateur à hystérésis 267 bascule quand la résistance atteint un seuil inférieur. Le microcontrôleur 40 peut alors faire décroître progressivement l'assistance en réduisant le taux de charge du rapport cyclique ou l'interdire dès la fin d'une manoeuvre jusqu'à ce que le comparateur 267 revienne à l'état initial après refroidissement du hâcheur 64 et de son radiateur.

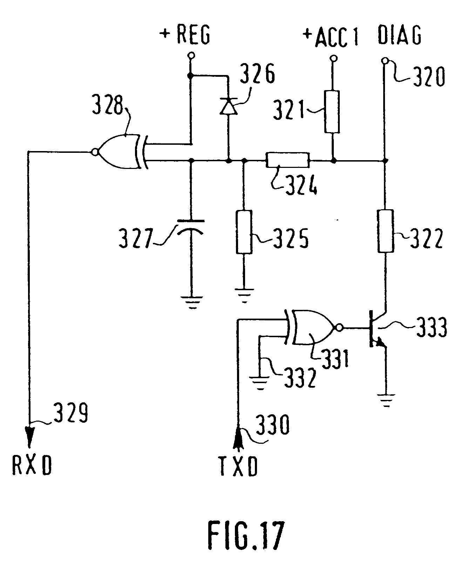

A la figure 17, on a représenté une interface de transmission qui permet d'échanger des données entre le dispositif de commande de l'invention et une station de diagnostic par exemple, disposée dans un garage pour la réparation et l'entretien du dispositif.

L'interface est connectée à une entrée bidirectionnelle 320 du calculateur. Cet accès sur le calculateur est connecté à un circuit de dialogue qui permet par une routine appropriée notamment d'interroger les différentes valeurs contenues dans les variables mémorisées lors du fonctionnement du dispositif de commande.

Les messages, constitués par une succession d'une série de bits, par exemple séparés par un entête et un message de vérification et/ou parité, sont transmis à la sortie 329 de l'interface par un circuit qui comporte une résistance de polarisation 321 connectée à la tension positive +AP de sortie de l'interrupteur général 54.

Le message est transmis par un pont de résistances 324 et 325 dont le point milieu est connecté à une première entrée d'une porte NON OU EXCLUSIF 328. La seconde entrée de la porte 328 est mise à la tension de sortie +REG du régulateur de tension par une diode en parallèle 326 dont la cathode est connectée à la seconde entrée de la porte 328 et l'anode à la première entrée.

La première entrée de la porte 328 est connectée par un condensateur 327 à la masse.

La sortie de la porte 328 est connectée à l'entrée de réception du microcontrôleur.

Le microcontrôleur envoie des messages par une sortie 330 qui est connectée à une première entrée d'une porte 331 NON OU EXCLUSIF dont une seconde entrée est mise de façon permanente à "0" logique par connection à la masse.

La sortie de la porte 331 est connectée à la base d'un transistor d'adaptation 333 dont l'émetteur est connecté à la masse et le collecteur, qui sort le signal utile, est connecté par une résistance de polarisation 322 à l'accès 320 au calculateur (et aussi à la tension +AP par la résistance 321 précitée).

On va maintenant décrire un mode de fonctionnement normal préféré de la direction assitée utilisant le dispositif de commande selon l'invention.

A la mise sous tension, les circuits du dispositif de commande sont ouverts. On exécute alors les tests de bon état des composants du dispositif de direction assitée. En particulier, on teste que la tension en sortie des moyens d'alimentation +APC, +REG et DOUB sont compris dans les limites pré-enregistrées dans le microcontrôleur 40. Puis, on vérifie l'état de l'interrupteur général de puissance 54. Ces différents tests sont exécutés de façon analogique et mobilisent en particulier les convertisseurs analogique/ numérique du microcontrôleur 40.

Si le résultat des tests est positif, on vérifie ensuite l'état du capteur de couple de braquage, du capteur de vitesse du véhicule (la vitesse du véhicule étant à ce moment nulle), du capteur de régime moteur thermique, de l'embrayage et de sa commande 58, et du moteur électrique par mesure du courant (qui doit être nul).

On exécute alors la mise en route de l'asservissement.

On exécute périodiquement la mesure de la tension de sortie du capteur de couple de braquage Vcouple, de la tension de sortie du capteur de vitesse du véhicule Vvit, et on teste alors la condition d'assistance :

SI [Vcouple = constante pendant une première durée de 10 à 20 millisecondes] ET [Vvit < Vseuil] ALORS [activation de la commande d'embrayage].

où Vseuil correspond à la vitesse limite en dessous de laquelle l'assitance de direction est active.

Si ce premier test d'activation est vérifié on exécute aussi le test suivant :

SI [Vvit < Vseuil] ET [Vcouple varie) ALORS [choix d'un rapport cyclique en fonction de la valeur instantanée de Vcouple] ET [excitation du moteur].

Le microcontrôleur 40 contient en mémoire des formes d'onde sur l'excitation du moteur électrique qui sont progressives de façon à éviter les "à-coups" sur la colonne de direction, "à-coups" qui seraient responsables d'un défaut de confort pour le conducteur. Ces formes d'onde en forme de rampes, ascendante pour l'excitation et descendante pour la désactivation du moteur, sont réalisées en augmentant ou en diminuant progressivement le rapport cyclique appliqué aux grilles des transistors de puissance du hâcheur 64 d'alimentation du moteur électrique.

Si les deux tests ne sont plus vérifiés, on exécute alors les tests de rebouclage :

SI [Vcouple = 0] ET [Imot = 0] ET [Vvit > Vseuil] ALORS [excitation de la commande de débrayage]

De plus, on exécute en permanence le test de bon fonctionnement sur la tension d'alimentation +APC du plus après contact, en particulier pour interdire de décharger complètement la batterie du véhicule. On exécute les autres tests de bon fonctionnement des capteurs, de l'embrayage et de la protection contre l'échauffement excessif du moteur d'assistance.

Les résultats de tests qui sont négatifs (panne ou défaut) entraînent une désactivation de l'assistance, comme il a été décrit plus haut, progressive pour éviter les "à coups" sur la direction.

On remarque que les tests permettent d'éviter de surveiller la vitesse de variation de l'angle volant qui est fonction de la force électromotrice du moteur d'assistance, cette grandeur étant délicate à mesurer.

## Revendications

1. Dispositif de commande pour direction assistée électrique, telle qu'une direction assistée électrique de parking, la direction comportant un volant de braquage (2) monté sur une colonne de direction, la colonne de direction étant directement ou non couplée par des moyens de transmission, comportant un mécanisme d'embrayage (7), à un dispositif (9) d'assistance de direction comportant au moins un moteur électrique (5) commandé par un dispositif de commande (12) partie intégrante de la direction assistée électrique et comportant :

   - des moyens de mesure (13) du couple de braquage produisant au moins un signal (14) indicatif du braquage ;
   - des moyens de mesure (15) d'au moins une condition d'assistance produisant au moins un signal (16) représentatif d'une condition d'assistance ;
   - des moyens d'alimentation contrôlée (17) du moteur électrique (5) recevant des signaux de contrôle (19) ;
   - des moyens de calcul (18) recevant les signaux (14,15) indicatifs du braquage et de la condition d'assistance et produisant lesdits signaux de contrôle (19) des moyens d'alimentation contrôlée du moteur, ces moyens de calcul (18) étant intégrés dans un module électronique comportant un dispositif de calcul (40), caractérisé en ce que le dispositif de commande comporte également des moyens de surveillance (60) de l'état de bon fonctionnement ou de disfonctionnement de l'embrayage.

2. Dispositif selon la revendication 1, caractérisé en ce que l'embrayage (7) comporte un organe d'activation préferentiellement réalisé par une bobine électromagnétique (306) dont le noyau mobile présente une extrémité destinée à actionner dans un premier sens ou dans un second sens la partie mobile de l'embrayage.

3. Dispositif selon la revendication 2, caractérisé en ce que l'organe d'activation (306) de l'embrayage (7) est alimenté à travers un circuit de commande de l'embrayage comportant des moyens (300-305) de commande proprement dits et des moyens (307-315) pour produire sur une sortie (316) une information logique d'état qui est restituée au microcontrôleur (40) pour surveiller l'état de l'embrayage par une routine adaptée.

4. Dispositif selon la revendication 3, caractérisé en ce que les moyens (300-305) de commande proprement dits comportent :

   - un amplificateur inverseur (302) qui reçoit sur son entrée (301), constituant l'entrée de commande du circuit de commande de l'embrayage, un signal d'embrayage provenant du microcontrôleur (40) ;
   - un transistor bipolaire (304) d'attaque dont la base est reliée à la sortie de l'amplificateur inverseur (302) par l'intermédiaire d'une première résistance (303), dont le collecteur est relié à une première tension d'alimentation positive du circuit (DOUB) par l'intermédiaire d'une seconde résistance (305), et dont l'émetteur est relié à la masse du circuit ;
   - un transistor MOS (300) dont la grille est connectée au collecteur du transistor bipolaire (304) d'attaque, dont le drain est relié à une seconde tension d'alimentation positive du circuit (+AP), et dont la source consititue une sortie de puissance à laquelle est reliée la charge (306)

5. Dispositif selon la revendication 4, caractérisé en ce que les moyens (307-315) pour produire une information logique d'état sont constitués par

   - un pont diviseur de résistances (307,308), dont l'une des bornes est connectée à la seconde tension d'alimentation positive du circuit (+AP), dont l'autre borne est connectée à la cathode d'une diode (309), et dont le point commun est relié à la source du transistor MOS, l'anode de la diode (309) étant connectée à la masse ;
   - un filtre RC constitué d'une résistance (310) et d'une capacité (311), dont l'entrée est connectée à la cathode de la diode (309) et dont la sortie est connectée entre deux diodes (312,313) d'adaptation des niveaux ;
   - un pont diviseur de résistances (314,315), dont l'entrée est connectée au point commun des deux diodes (312,313) et dont le point milieu est connecté à la sortie (316) du circuit de commande de l'embrayage.

6. Dispositif selon la revendication 4 ou la revendication 5, caractérisé en ce que le dispositif de calcul (40) comporte des moyens pour diagnostiquer l'état de l'embrayage en fonction :

- de l'état du signal d'embrayage présent sur l'entrée de commande du circuit de commande de l'embrayage ;
- de l'état de la sortie de puissance du circuit de commande de l'embrayage ;
- et de l'état de l'information logique produite en sortie du circuit de commande de l'embrayage,

ces moyens exécutant un traitement selon la table de vérité suivante :

| Entrée commande | Sortie puissance | Info état | Diagnostic |
|---|---|---|---|
| L | L | L | Fonctionnement normal |
| H | H | H | |
| L | L | H | circuit ouvert charge |
| H | H | H | |
| L | H | H | Interrupteur en court-circuit |
| H | H | H | |
| L | L | L | Charge en court-circuit |
| H | L | L | |

7. Dispositif selon l'une quelconque des revendications précédentes, caractérisé en ce que le dispositif de calcul est intégré dans un module électronique sous forme d'un circuit intégré monté avec ses composants de service sur un circuit imprimé monté dans un boîtier étanche.

8. Dispositif selon la revendication 7, caractérisé en ce que le boîtier est fixé au carter du dispositif d'assistance de façon à constituer une unité qui facilite tant le montage du véhicule que sa maintenance.

9. Dispositif selon la revendication 7, caractérisé en ce que le module électronique de commande de la direction assistée de parking est construit autour d'un microcontrôleur (40), qui reçoit les informations concernant le couple de braquage et la condition d'assistance sur des entrées respectivement (90, 91, 92) d'une part, et (84, 85), d'autre part, de façon à élaborer selon un programme pré-enregistré dans une mémoire morte de programme les informations de commande nécessaires au dispositif d'assistance, par contrôle au moyen de sorties (71 à 74) d'un hâcheur de puissance (64), dont des sorties (65 et 66) alimentent le moteur électrique du dispositif d'assistance.

10. Dispositif selon la revendication 9, caractérisé en ce que le microcontrôleur (40) commande aussi un interrupteur (58) par une entrée de commande (59) dont la sortie (61) alimente un organe d'activation d'un embrayage électromagnétique (7) interposé dans le dispositif d'assistance entre le moteur électrique (5) et son réducteur (8).

11. Dispositif selon la revendication 9, caractérisé en ce que le microcontrôleur (40) commande aussi un interrupteur général de puissance (54), préférentiellement réalisé par un relais électromagnétique, dont la sortie (56) fournit de l'énergie électrique au dispositif d'assistance (5-8).

12. Dispositif selon la revendication 9, caractérisé en ce que le microcontrôleur (40) vérifie différentes conditions de fonctionnement du dispositif de direction assistée, chaque condition étant réalisée par au moins un signal de mesure provenant d'un capteur et transmis à un port d'entrée du microcontrôleur (40) pour analyse programmée.

13. Dispositif selon la revendication 12, caractérisé en ce que le microcontrôleur (40) comporte des moyens de surveillance (45) du niveau de la tension de la batterie, dont une borne est connectée par un câble et par l'intermédiaire du contact de mise en route du véhicule à une borne +APC dite de "plus après contact".

14. Dispositif selon la revendication 12, caractérisé en ce que le microcontrôleur (40) comporte des moyens de surveillance (67-70) du courant traversant l'induit du moteur électrique d'assistance.

15. Dispositif selon la revendication 12, caractérisé en ce que le microcontrôleur (40) comporte des moyens de surveillance (73) de l'échauffement thermique du moteur électrique d'assistance.

**16.** Dispositif selon la revendication 9, caractérisé en ce que le microcontrôleur (40) comporte une sortie de commande (51) d'un montage élévateur de la tension comme un doubleur de tension (49), ce doubleur de tension comportant une entrée (50) sur laquelle il reçoit la tension issue de la batterie et une sortie (52) sur laquelle il délivre une tension égale au double de cette tension et qui est appliquée à la commande d'au moins un interrupteur de puissance, tel qu'un transistor à effet de champ de puissance du type MOSFET "HIGH SIDE".

**17.** Dispositif selon l'une quelconque des revendications précédentes, caractérisé en ce que les moyens d'alimentation contrôlée comportent une alimentation électrique répartie en deux voies (101 et 102).

**18.** Dispositif selon la revendication 17, caractérisé en ce que la première voie (101) comporte un superviseur d'alimentation (100) connecté entre une première borne +APC dite de "plus après contact" et une seconde borne -BAT provenant du système d'alimentation électrique du véhicule, qui élabore une tension de sortie régulée +REG et en ce que la voie (101) comporte un fil connecté à la première borne +APC, le fil étant connecté à un circuit comportant une capacité (103) et une diode (104) mise à la masse électrique et dont les points communs sont connectés à l'anode d'une diode (105) ; la cathode de la diode (105) étant connectée à une première borne d'un condensateur (106) et à l'entrée principale d'un circuit intégré régulateur (100) ; la seconde borne du condensateur (106) étant connectée à la masse, en ce que la sortie du circuit intégré (100) est connectée à tous les points du module électronique marqués +REG et filtré avec un condensateur (107) mis à la masse.

**19.** Dispositif selon la revendication 18, caractérisé en ce que la première voie (101) comporte aussi un circuit (114-116) constitué d'une résistance (114) et d'un condensateur (115), mis à la masse, et dont le point commun (116) est connecté à l'entrée de remise à l'état initial RESET du microcontrôleur (40) ; ladite sortie (116) permettant de forcer la borne RESET de remise à l'état initial du microcontrôleur si l'alimentation + REG chute sous 4,5V.

**20.** Dispositif selon la revendication 17, caractérisé en ce que la seconde voie (102) est connectée à l'entrée +APC provenant du système d'alimentation du véhicule et reçoit par une entrée (121) notée +REG, la tension régulée issue de la première voie (101) ; en ce que la tension (+APC) provenant du système d'alimentation du véhicule est connectée à un circuit parallèle composé d'un condensateur (118), d'une diode (119) et d'une résistance variable (108), de façon à ce que la sortie (120) de ce circuit délivre une tension (+APC) protégée des surtensions au reste du module électronique.

**21.** Dispositif selon la revendication 20, caractérisé en ce que la sortie (120) du circuit parallèle est connectée à une première borne d'une résistance (109) dont l'autre borne est connectée au point commun de l'anode d'une diode (110), dont la cathode est connectée à l'entrée +REG, d'un condensateur (112) dont l'autre borne est connectée à la masse et d'une résistance (111), elle aussi connectée à la masse ; une prise de sortie (117) dudit circuit de sortie de la seconde voie (102) étant connectée à une entrée d'un convertisseur analogique-numérique interne au microcontrôleur (40) aux fins de surveillance de l'alimentation.

**22.** Dispositif selon l'une des revendications 17 à 20, caractérisé en ce que les moyens d'alimentation contrôlée comportent aussi un circuit élévateur de tension (122-133).

**23.** Dispositif selon la revendication 22, caractérisé en ce que le circuit élévateur de tension est du type dit de pompe de charge dont une entrée de commande est connectée à une sortie d'horloge programmable du microcontrôleur (40), et en ce que la dite horloge programmable est ajustée en fonction des paramètres de surveillance des diverses tensions d'alimentation contrôlée.

**24.** Dispositif selon la revendication 9, caractérisé en ce que le hâcheur (64) comporte quatre interrupteurs de puissance (171 - 174) montés sur un pont en "H", en ce que les électrodes de commande (grilles) des interrupteurs sont commandées par un circuit logique de commande (175) qui reçoit du microcontrôleur (40) un signal de rapport cyclique réglé en fonction des conditions d'assistance estimées par le microcontrôleur (40), un signal d'activation du hâcheur dans le sens direct (72) et un signal d'activation du hâcheur dans le sens inverse (73), en ce que au moins deux des interrupteurs de puissance comportent des moyens (166, fig. 6) de mesure du courant traversant l'induit du moteur électrique (179), en ce que le dispositif de commande comporte aussi un circuit de test du courant traversant l'induit du moteur, en ce que le circuit de test comporte un étage amplificateur (220) qui présente deux entrées (221 et 222) provenant des deux électrodes de source des transistors de puissance (171, 172) du hâcheur (64), en ce que la sortie de l'amplificateur (220) est connectée à un étage constitué par un filtre actif (223) dont la sortie (224) est transmise à un port de conversion analogique/numérique du microcontrôleur (40), et en ce que le microcontrôleur (40) comporte un programme de test du moteur électrique en fonction du courant et de la tension, notamment établie par le réglage (71) du rapport cyclique.

**25.** Dispositif selon la revendication précédente, caractérisé en ce que le test est constitué par une mesure du courant traversant le moteur (179) en court-circuit et en circuit ouvert, et en ce que le microcontrôleur (40) comporte des moyens pour supprimer les commandes de l'embrayage et de l'interrupteur de puissance, en réponse aux résultats de test.

**26.** Dispositif selon la revendication 1, caractérisé en ce que le dispositif de commande (12) génère des formes d'onde du courant d'excitation du moteur électrique (5) d'assistance qui sont progressives, de façon à réduire les "à-coups" sur la colonne de direction.

**27.** Dispositif selon la revendication précédente, caractérisé en ce que le microcontrôleur (40) contient en mémoire des formes d'onde en forme de rampes, ascendante pour l'excitation et descendante pour la désactivation du moteur, réalisées en augmentant ou en diminuant progressivement le rapport cyclique appliqué aux grilles des transistors de puissance d'un hâcheur (64) d'alimentation du moteur électrique (5).

## Claims

**1.** A control apparatus for an electrical power assisted steering system such as an electrical power assisted steering system for parking, the steering system comprising a steering wheel (2) mounted on a steering column, the steering column being directly or indirectly coupled, through transmission means including a clutch mechanism (7), to a power steering apparatus (9), which comprises at least one electric motor (5) controlled by a control apparatus (12), which is an integral part of the electrical power assisted steering system and which includes:

- means (13) for measuring steering torque and producing at least one signal (14) indicative of steering action;

- means (15) for measuring at least one condition for power assistance and producing at least one signal (16) representing a condition for power assistance;

- controlled power supply means (17) for the electric motor, receiving control signals (19);

- computing means (18) for receiving the signals (14, 15) indicating steering action and the condition for power assistance, and for producing the said control signals (19) for the controlled power supply means for the motor, the said computing means (18) being integrated into an electronic module comprising a computing device (40), characterised in that the control apparatus further includes means (60) for monitoring the state of correct operation or malfunction of the clutch.

**2.** Apparatus according to Claim 1, characterised in that the clutch (7) includes an actuating member, preferably in the form of an electromagnetic coil (306), the movable core of which has an end adapted to actuate the movable part of the clutch in a first direction or a second direction.

**3.** Apparatus according to Claim 2, characterised in that the actuating member (306) of the clutch (7) is supplied with power through a control circuit of the clutch which comprises control means proper (300 - 305) and means (307 - 315) for producing on an output (316) a logic state signal which is fed back to the microcontroller (40) for monitoring the state of the system by means of a suitable routine.

**4.** Apparatus according to Claim 3, characterised in that the control means proper (300 - 305) comprise:

- an inverting amplifier (302) which receives a clutch signal from the microcontroller (40) on its input (301), which constitutes the command signal input of the control circuit for the clutch;

- a bipolar input transistor (304), the base of which is connected to the output of the inverting amplifier (302) via a first resistor (303), with its collector being connected to a first positive power supply voltage (DOUB) of the circuit via a second resistor (305), its emitter being connected to the earth of the circuit;

- an MOS transistor (300), the grid of which is connected to the collector of the bipolar input transistor (304), with its drain being connected to a second positive power supply voltage (+AP) of the circuit, and with its source constituting a power output to which the load (306) is connected.

**5.** Apparatus according to Claim 4, characterised in that the means (307 - 315) for producing a logic state signal comprise:

- a resistive splitting bridge (307, 308), one terminal of which is connected to the second positive power supply voltage (+AP) of the circuit, its other terminal being connected to the cathode of a diode (309), and its common point being connected to the source of the MOS transistor, the anode of the diode (309) being connected to earth;

- an R-C filter consisting of a resistor (310) and a capacitor (311), the input of which is connected to the cathode of the diode (309), with its output being connected between two level-adapting diodes (312, 313);

- a resistive divider bridge (314, 315), the input of which is connected to the common point of the two diodes (312, 313), its middle point being connected to the output (316) of the control circuit of the clutch.

6. Apparatus according to Claim 4 or Claim 5, characterised in that the computing device (40) comprises means for diagnosing the state of the clutch as a function of:

- the state of the clutch signal present on the command signal input of the clutch control circuit;

- the state of the power output of the clutch control circuit;

- and the state of the logic signal produced at the output of the clutch control circuit,

with the said means carrying out processing in accordance with the following proving table:

| Control input | Power output | State signal | Diagnostic |
|---|---|---|---|
| L | L | L | Normal operation |
| H | H | H | |
| L | L | H | Load on open circuit |
| H | H | H | |
| L | H | H | Interruptor on short circuit |
| H | H | H | |
| L | L | L | Load on short circuit |
| H | L | L | |

7. Apparatus according to any one of the preceding Claims, characterised in that the computing device is integrated into an electronic module in the form of an integrated circuit which is mounted, with the components which it serves, on a printed circuit arranged within a sealed housing.

8. Apparatus according to Claim 7, characterised in that the housing is fixed to the casing of the power steering apparatus, whereby to constitute a unit which facilitates both assembly of the vehicle and its maintenance.

9. Apparatus according to Claim 7, characterised in that the electronic control module of the power assisted steering system for parking is constructed around a microcontroller (40), which receives the signals relating to the steering torque and the condition for power assistance on respective inputs (90, 91, 92) and (84, 85), in such a way as to generate the command signals required by the power steering apparatus in accordance with a programme previously entered into a programme storage memory, so as to control, via outputs (71 to 74), a power actuator (64) having outputs (65 and 66) which deliver power to the electric motor of the power steering apparatus.

10. Apparatus according to Claim 9, characterised in that the microcontroller (40) also controls an interruptor (58) through a control input (59), the output (61) of which supplies power to an actuating member of an electromagnetic clutch (7) which is interposed in the power steering apparatus between the electric motor (5) and its speed reducing means (8).

11. Apparatus according to Claim 9, characterised in that the microcontroller (40) further controls a main power interruptor (54) which preferably consists of an electromagnetic relay, the output (56) of which supplies electrical energy to the power steering apparatus (5 - 8).

**12.** Apparatus according to Claim 9, characterised in that the microcontroller (40) verifies various operating conditions of the power assisted steering apparatus, each said condition being represented by at least one measurement signal derived from a sensor and transmitted to an input port of the microcontroller (40) for programmed analysis.

**13.** Apparatus according to Claim 12, characterised in that the microcontroller (40) includes means (45) for monitoring the voltage level of the battery, one terminal of which is connected, through a cable and through the starting switch of the vehicle, to a so-called "positive when ignition on" terminal +APC.

**14.** Apparatus according to Claim 12, characterised in that the microcontroller (40) includes means (67 - 70) for monitoring the current flowing through the armature of the electric power assistance motor.

**15.** Apparatus according to Claim 12, characterised in that the microcontroller (40) includes means (73) for monitoring heating of the electric power assistance motor.

**16.** Apparatus according to Claim 9, characterised in that the microcontroller (40) has an output (51) for controlling a voltage amplifying means such as a voltage doubler (49), the said voltage doubler having an input (50), on which it receives the voltage delivered by the battery, and an output (52) on which it delivers a voltage which is equal to double the said voltage and which is applied to the control of at least one power interruptor, such as a field effect power transistor of the MOSFET "HIGH SIDE" type.

**17.** Apparatus according to any one of the preceding Claims, characterised in that the controlled power supply means include an electrical power supply means split into two paths (101 and 102).

**18.** Apparatus according to Claim 17, characterised in that the first path (101) includes a power supply monitor (100) which is connected between a first terminal +APC, being a so-called "positive when ignition on" terminal, and a second terminal -BAT for power from the electrical power supply system of the vehicle, and which generates a regulated output voltage +REG, and in that the path (101) includes a wire connected to the first terminal +APC, the wire being connected to a circuit that includes a capacitor (103) and an earthed diode (104), and the common points of which are connected to the anode of a diode (105); the cathode of the diode (105) being connected to a first terminal of a capacitor (106) and to the main input of an integrated regulating circuit (100); the second terminal of the capacitor (106) being connected to earth, and in that the output of the integrated circuit (100) is connected to all of the points of the electronic module marked +REG, being filtered through an earthed capacitor (107).

**19.** Apparatus according to Claim 18, characterised in that the first path (101) further includes a circuit (114 - 116) comprising a resistor (104) and an earthed capacitor (115), the common point (116) of which is connected to the RESET input for restoration of the microcontroller (40) to its initial state; the said output (116) enabling the RESET terminal to restore the microcontroller to its initial state if the supply voltage +REG falls below 4.5 V.

**20.** Apparatus according to Claim 17, characterised in that the second path (102) is connected to the input +APC from the power supply system of the vehicle, and receives, through an input (121) denoted +REG, the regulated voltage delivered from the first path (101); in that the voltage (+APC) delivered from the vehicle power supply system is connected to a parallel circuit comprising a capacitor (118), a diode (119) and a variable resistance (108), in such a way that the output (120) of the said circuit delivers a voltage (+APC) that is protected against excess voltage occurring in the remainder of the electronic module.

**21.** Apparatus according to Claim 20, characterised in that the output (120) of the parallel circuit is connected to a first terminal of a resistor (109), the other terminal of which is connected to the common point to which are connected the anode of a diode (110), the cathode of which is connected to the input +REG, a capacitor (112), the other terminal of which is connected to earth, and a resistor (111) which is also connected to earth; an output (117) of the said output circuit of the second path (102) being connected to an input of an internal analogue/digital converter of the microcontroller (40) with a view to monitoring the power supply.

**22.** Apparatus according to one of Claims 17 to 20, characterised in that the controlled power supply means further include a voltage amplifying circuit (122 - 133).

**23.** Apparatus according to Claim 22, characterised in that the voltage amplifying circuit is of the charge pump type, having a control input connected to a programmable timer output of the microcontroller (40), and in that the said programmable timer is adjusted as a function of the monitored parameters of the various voltages of the controlled power supply.

24. Apparatus according to Claim 9, characterised in that the power actuator (64) comprises four power interruptors (171 - 174) mounted in "H" formation as a bridge, in that the control electrodes (grids) of the interruptors are controlled by means of a control logic circuit (175) which receives from the microcontroller (40) a cyclic ratio signal which is regulated as a function of the conditions for power assistance estimated by the microcontroller (40), a signal for activation of the power actuator in the forward direction (72), and a signal for activation of the power actuator in the reverse direction (73), in that at least two of the power interruptors include means (166, Figure 6) for measuring the current flowing through the armature of the electric motor (179), in that the control apparatus further includes a circuit for testing current flowing through the armature of the motor, in that the test circuit includes an amplifier stage (220) which has two inputs (221 and 222) for signals from the two source electrodes of the power transistors (171, 172) of the power actuator (64), in that the output of the amplifier (220) is connected to a stage comprising an active filter (223), the output (224) of which delivers signals to an analogue/digital conversion port of the microcontroller (40), and in that the microcontroller (40) includes a programme for testing the electric motor in terms of current and voltage, carried out in particular by adjustment (71) of the cyclic ratio.

25. Apparatus according to the preceding Claim, characterised in that the test comprises measurement of the current flowing through the motor (179) in short circuit and in open circuit, and in that the microcontroller (40) includes means for suppressing the control signals for the clutch and the power interruptor, in response to the test results.

26. Apparatus according to Claim 1, characterised in that the control apparatus (12) generates waveforms for the excitation current of the electric power assistance motor (5) which are progressive, in such a way as to reduce jerks on the steering column.

27. Apparatus according to the preceding Claim, characterised in that the microcontroller (40) contains ramp waveforms in its memory, of increasing gradient for excitation and decreasing gradient for deactivation of the motor, which are obtained by progressively increasing or reducing the cyclic ratio applied to the grids of the power transistors of a power supply actuator (64) of the electric motor (5).

## Patentansprüche

1. Steuervorrichtung für eine elektrische Hilfskraftlenkung, etwa eine elektrische Parkhilfskraftlenkung, wobei die Lenkung ein Lenkrad (2) umfaßt, das an einer Lenksäule angebracht ist, und wobei die Lenksäule direkt oder indirekt durch Übertragungsmittel, die einen Kupplungsmechanismus (7) enthalten, mit einer Hilfskraftlenkvorrichtung (9) verbunden ist, die wenigstens einen Elektromotor (5) umfaßt, der durch eine Steuervorrichtung (12) gesteuert wird, die einen wesentlichen Bestandteil der elektrischen Hilfskraftlenkung bildet und die folgenden Teile enthält:

   - Meßmittel (13) zur Messung des Lenkmoments, die wenigstens ein Signal (14) zur Angabe des Lenkeinschlags erzeugen;
   - Meßmittel (15) zur Messung mindestens einer Hilfkraftbedingung, die wenigstens ein Signal (16) erzeugen, das für eine Lenkhilfebedingung repräsentativ ist;
   - Mittel (17) für die kontrollierte Stromversorgung des Elektromotors (5), die Steuersignale (19) empfangen;
   - Rechenmittel (18), welche die Signale (14, 15) zur Angabe des Lenkeinschlags und der Lenkhilfebedingung empfangen und die besagten Steuersignale (19) für die Mittel (17) zur kontrollierten Stromversorgung der Hilfskraftlenkvorrichtung erzeugen, wobei diese Rechenmittel (18) in ein Elektronikmodul integriert sind, das eine Rechenvorrichtung (40) enthält , **dadurch gekennzeichnet,** daß die Steuervorrichtung außerdem Mittel (60) zur Überwachung des Zustands der Funktionsfähigkeit oder Funktionsstörung der Kupplung umfaßt.

2. Vorrichtung nach Anspruch 1 , **dadurch gekennzeichnet,** daß die Kupplung (7) ein Aktivierungsorgan umfaßt, das vorzugsweise aus einer elektromagnetischen Spule (306) besteht, deren beweglicher Kern ein Ende aufweist, um den beweglichen Teil der Kupplung in einer ersten Richtung oder in einer zweiten Richtung zu betätigen.

3. Vorrichtung nach Anspruch 2 , **dadurch gekennzeichnet,** daß das Aktivierungsorgan (306) der Kupplung (7) über eine Steuerschaltung der Kupplung gespeist wird, welche eigentliche Steuerungsmittel (300-305) sowie Mittel (307-315) enthält, um an einem Ausgang (316) eine logische Statusinformation zu erzeugen, die an die Mikrosteuereinheit (40) zurückübertragen wird, um den Zustand der Kupplung durch eine entsprechende Routine zu überwachen.

4. Vorrichtung nach Anspruch 3 , **dadurch gekennzeichnet,** daß die eigentlichen Steuerungsmittel (300-305) die folgenden Teile umfassen:

- einen Umkehrverstärker (302), der an seinem Eingang (301), der den Steuereingang der Steuerschaltung der Kupplung bildet, ein von der Mikrosteuereinheit (40) kommendes Einrücksignal empfängt;
- einen bipolaren Treibertransistor (304), dessen Basis mit dem Ausgang des Umkehrverstärkers (302) über einen ersten Widerstand (303) verbunden ist, dessen Kollektor an eine erste positive Speisespannung der Schaltung (DOUB) über einen zweiten Widerstand (305) angeschlossen ist und dessen Emitter mit der Masse der Schaltung verbunden ist;
- einen MOS-Transistor (300), dessen Steuerelektrode an den Kollektor des bipolaren Treibertransistors (304) angeschlossen ist, dessen Drain mit einer zweiten positiven Speisespannung der Schaltung (+AP) verbunden ist und dessen Source einen Leistungsausgang bildet, mit dem die Ladespule (306) verbunden ist.

5. Vorrichtung nach Anspruch 4 , **dadurch gekennzeichnet,** daß die Mittel (307-315) zur Erzeugung einer logischen Statusinformation die folgenden Teile umfassen:

- eine Teilerbrücke aus Widerständen (307, 308), von deren Anschlüssen einer mit der positiven Speisespannung (+AP) verbunden ist, während ihr anderer Anschluß mit der Kathode einer Diode (309) verbunden ist, und deren gemeinsamer Anschluß mit der Source des MOS-Transistors verbunden ist, während die Anode der Diode (309) an die Masse angeschlossen ist;
- ein RC-Filter, das aus einem Widerstand (310) und einer Kapazität (311) besteht, dessen Eingang an die Kathode der Diode (309) angeschlossen ist und dessen Ausgang zwischen zwei Dioden (312, 313) für die Pegelanpassung angeschlossen ist;
- eine Teilerbrücke aus Widerständen (314, 315), deren Eingang mit dem gemeinsamen Anschluß der beiden Dioden (312, 313) verbunden ist und deren Mittelanschluß an den Ausgang (316) der Steuerschaltung für die Kupplung angeschlossen ist.

6. Vorrichtung nach Anspruch 4 oder Anspruch 5, **dadurch gekennzeichnet,** daß die Rechenvorrichtung (40) Mittel zur Diagnostizierung des Zustands der Kupplung in Abhängigkeit von den folgenden Punkten umfaßt:

- Status des am Steuereingang der Steuerschaltung der Kupplung anstehenden Einrücksignals;
- Status des Leistungsausgangs der Steuerschaltung der Kupplung;
- und Status der logischen Information, die am Ausgang der Steuerschaltung der Kupplung erzeugt wird; wobei diese Mittel eine Verarbeitung entsprechend der nachfolgenden Wahrheitstafel ausführen:

| Steuereingang | Leistungsausgang | Statusinfo | Diagnose |
|---|---|---|---|
| L | L | L | Normalbetrieb |
| H | H | H | |
| L | L | H | Ladestromkreis unterbrochen |
| H | H | H | |
| L | H | H | Kurzschluß Schalter |
| H | H | H | |
| L | L | L | Kurzschluß Ladung |
| H | L | L | |

7. Vorrichtung nach einem der vorangehenden Ansprüche, **dadurch gekennzeichnet,** daß die Rechenvorrichtung in ein Elektronikmodul in Form einer integrierten Schaltung integriert ist, die mit ihren Betriebsbauteilen auf einer in einem dichten Gehäuse eingebauten Leiterplatte angebracht ist.

8. Vorrichtung nach Anspruch 7 , **dadurch gekennzeichnet,** daß das Elektronikgehäuse am Gehäuse der Hilfskraftlenkvorrichtung befestigt ist, so daß eine Einheit gebildet wird, die sowohl die Montage des Fahrzeugs als auch seine Wartung erleichtert.

9. Vorrichtung nach Anspruch 7 , **dadurch gekennzeichnet,** daß das elektronische Steuermodul der Parkhilfskraftlenkung um eine Mikrosteuereinheit (40) konstruiert ist, welche die Informationen über das Lenkmoment und die Lenkhilfebedingung an entsprechenden Eingängen (90, 91, 92) einerseits und (84, 85) andererseits empfängt, um nach einem Programm, das in einem Programmfestspeicher abgespeichert ist, die für die Hilfskraftlenkvorrichtung notwendigen Informationen zu erarbeiten, wobei über Ausgänge (71 bis 73) ein Leistungszerhacker (64) kontrolliert wird, dessen Ausgänge (65 und 66) den Elektromotor der Hilfskraftlenkvorrichtung speisen.

10. Vorrichtung nach Anspruch 9, **dadurch gekennzeichnet,** daß die Mikrosteuereinheit (40) außerdem einen Schalter (58) über einen Steuereingang (59) steuert, dessen Ausgang (61) ein Organ zur Aktivierung einer elektromagnetischen Kupplung (7) ansteuert, die in der Hilfskraftlenkvorrichtung zwischen dem Elektromotor (5) und seinem Untersetzungsgetriebe (8) eingefügt ist.

11. Vorrichtung nach Anspruch 9, **dadurch gekennzeichnet,** daß die Mikrosteuereinheit (40) außerdem einen Leistungshauptschalter (54), vorzugsweise in der Ausführung als elektromagnetisches Relais, steuert, dessen Ausgang (56) elektrische Energie an die Hilfskraftlenkvorrichtung (5-8) liefert.

12. Vorrichtung nach Anspruch 9, **dadurch gekennzeichnet,** daß die Mikrosteuereinheit (40) verschiedene Betriebsbedingungen der Hilfskraftlenkvorrichtung überprüft, wobei jede Bedingung durch wenigstens ein Meßsignal gegeben ist, das von einem Sensor kommt und für eine programmierte Analyse an einen Eingangsport der Mikrosteuereinheit (40) übertragen wird.

13. Vorrichtung nach Anspruch 12, **dadurch gekennzeichnet,** daß die Mikrosteuereinheit (40) Überwachungsmittel (45) für den Spannungspegel der Batteriespannung umfaßt, von denen ein Anschluß durch ein Kabel und über den Einschaltkontakt des Fahrzeugs mit einer sogenannten "Einschalt-Plusklemme" +APC verbunden ist.

14. Vorrichtung nach Anspruch 12, **dadurch gekennzeichnet,** daß die Mikrosteuereinheit (40) Überwachungsmittel (67-70) für den durch den Anker des Lenkhilfe-Elektromotors fließenden Strom umfaßt.

15. Vorrichtung nach Anspruch 12, **dadurch gekennzeichnet,** daß die Mikrosteuereinheit (40) Überwachungsmittel (73) für die thermische Erhitzung des Lenkhilfe-Elektromotors umfaßt.

16. Vorrichtung nach Anspruch 9 , **dadurch gekennzeichnet,** daß die Mikrosteuereinheit (40) einen Steuerausgang (51) für eine Spannungserhöherschaltung wie einen Spannungsdoppler (49) umfaßt, wobei dieser Spannungsdoppler einen Eingang (50) enthält, an dem er die von der Batterie kommende Spannung erhält, sowie einen Ausgang (52), an dem er eine Spannung gleich dem Doppelten dieser Spannung abgibt, welche auf die Steuerung wenigstens eines Leistungsschalters angewendet wird, etwa eines Feldeffekt-Leistungstransistors des Typs MOSFET "HIGH SIDE".

17. Vorrichtung nach einem der vorangehenden Ansprüche, **dadurch gekennzeichnet,** daß die Mittel für die kontrollierte Stromversorgung eine auf zwei Kanäle (101 und 102) verteilte Stromzuleitung umfassen.

18. Vorrichtung nach Anspruch 17, **dadurch gekennzeichnet,** daß der erste Kanal (101) einen Stromversorgungsüberwacher (100) enthält, der zwischen einer ersten Klemme +APC, der sogenannten "Einschalt-Plusklemme", und einer an das Stromversorgungssystem des Fahrzeugs angeschlossenen zweiten Klemme -BAT geschaltet ist und der eine geregelte Ausgangsspannung +REG erzeugt, und daß der Kanal (101) eine an die erste Klemme +APC angeschlossene Leitung umfaßt, wobei diese Leitung mit einer Schaltung verbunden ist, die eine Kapazität (103) und eine mit der elektrischen Masse verbundene Diode (101) enthält, deren gemeinsame Anschlüsse an die Anode einer Diode (105) angeschlossen sind, während die Kathode der Diode (105) mit einem ersten Anschluß eines Kondensators (106) und mit dem Haupteingang der integrierten Reglerschaltung (100) verbunden ist, wobei der zweite Anschluß des Kondensators (106) mit der Masse verbunden ist, und daß der Ausgang der integrierten Schaltung (100) an alle mit +REG bezeichneten Punkte des Elektronikmoduls angeschlossen und mit einem an die Masse gelegten Kondensator (107) gefiltert ist.

19. Vorrichtung nach Anspruch 18, **dadurch gekennzeichnet,** daß der Kanal (101) außerdem eine Schaltung (114-116) umfaßt, die aus einem Widerstand (114) und einem an die Masse gelegten Kondensator (115) besteht und deren gemeinsamer Anschluß (116) mit dem Rückstellungseingang RESET der Mikrosteuereinheit (40) verbunden ist, wobei durch den besagten Ausgang (116) der RESET-Anschluß für die Rückstellung der Mikrosteuereinheit gesetzt werden kann, wenn die Stromversorgung + REG unter 4,5 V absinkt.

20. Vorrichtung nach Anspruch 17, **dadurch gekennzeichnet**, daß der zweite Kanal (102) an den vom Stromversorgungssystem des Fahrzeugs kommenden Eingang +APC angeschlossen ist und über einen als +REG bezeichneten Eingang (121) die vom ersten Kanal (101) kommende geregelte Spannung erhält, und daß die vom Stromversorgungssystem des Fahrzeugs kommende Spannung (+APC) an eine Parallelschaltung angelegt wird, die aus einem Kondensator (118), einer Diode (119) und einem veränderlichen Widerstand (108) besteht, so daß der Ausgang (120) dieser Schaltung eine Spannung (+APC) liefert, die vor Überspannungen im übrigen Teil des Elektronikmoduls geschützt ist.

21. Vorrichtung nach Anspruch 20, **dadurch gekennzeichnet**, daß der Ausgang (120) der Parallelschaltung mit einem ersten Anschluß eines Widerstands (109) verbunden ist, dessen anderer Anschluß mit dem gemeinsamen Anschluß der Anode einer Diode (110), deren Kathode an den Eingang +REG angeschlossen ist, eines Kondensators (112), dessen anderer Anschluß an die Masse angeschlossen ist, und eines Widerstands (111) verbunden ist, der ebenfalls an die Masse angeschlossen ist, wobei ein Ausgangsanschluß 117 der besagten Ausgangsschaltung des zweiten Kanals (102) mit einem Eingang eines internen Analog-Digital-Wandlers der Mikrosteuereinheit (40) zwecks Überwachung der Stromversorgung verbunden ist.

22. Vorrichtung nach Anspruch 17, **dadurch gekennzeichnet**, daß die Mittel für die kontrollierte Stromversorgung auch eine Spannungserhöherschaltung (122-133) umfassen.

23. Vorrichtung nach Anspruch 22, **dadurch gekennzeichnet**, daß die Spannungserhöherschaltung als sogenannte Ladepumpenschaltung ausgeführt ist, von der ein Steuereingang an einen programmierbaren Taktgeberausgang der Mikrosteuereinheit (40) angeschlossen ist, und daß der besagte programmierbare Taktgeber in Abhängigkeit von den Überwachungsparametern der unterschiedlichen Spannungen der kontrollierten Stromversorgung eingestellt wird.

24. Vorrichtung nach Anspruch 9 , **dadurch gekennzeichnet**, daß der Zerhacker (64) vier Leistungsschalter (171-174) umfaßt, die auf einer "H"-Brücke angeordnet sind, daß die Steuerelektroden (Gates) der Schalter durch eine logische Steuerschaltung (175) gesteuert werden, die von der Mikrosteuereinheit (40) ein Tastverhältnis, das in Abhängigkeit von den durch die Mikrosteuereinheit (40) bewerteten Lenkhilfebedingungen geregelt wird, ein Aktivierungssignal des Zerhackers für Rechtslauf (72) und ein Aktivierungssignal des Zerhackers für Linkslauf (73) empfängt, daß wenigstens zwei der Leistungsschalter Meßmittel (166, Fig. 6) zur Messung des durch den Anker des Elektromotors (179) fließenden Stroms umfassen, daß die Steuervorrichtung außerdem eine Testschaltung für den durch den Anker fließenden Strom enthält, daß die Testschaltung eine Verstärkerstufe (220) umfaßt, die zwei Eingänge (221 und 222) aufweist, die von den beiden Source-Elektroden der Leistungstransistoren (171, 172) des Zerhackers (64) kommen, daß der Ausgang des Verstärkers (220) an eine Stufe angeschlossen ist, die aus einem Aktivfilter (223) besteht, dessen Ausgang (224) an einen Analog/Digital-Wandler-Port der Mikrosteuereinheit (40) angeschlossen ist, und daß die Mikrosteuereinheit (40) ein Testprogramm für den Elektromotor in Abhängigkeit vom Strom und von der Spannung enthält, die insbesondere durch die Regelung (71) des Tastverhältnisses bestimmt wird.

25. Vorrichtung nach dem vorangehenden Anspruch, **dadurch gekennzeichnet,** daß der Test in einer Messung des Stroms besteht, der bei Kurzschluß und bei unterbrochenem Stromkreis durch den Motor (179) fließt, und daß die Mikrosteuereinheit (40) Mittel zur Unterdrückung der Steuerbefehle der Kupplung und des Leistungsschalters nach Maßgabe der Testergebnisse umfaßt.

26. Vorrichtung nach Anspruch 1 , **dadurch gekennzeichnet**, daß die Steuervorrichtung (12) Wellenformen des Erregerstroms des Lenkhilfe-Elektromotors (5) erzeugt, die progressiv verlaufen, um die "ruckartige Bewegungen" an der Lenksäule einzuschränken.

27. Vorrichtung nach dem vorangehenden Anspruch, **dadurch gekennzeichnet,** daß die Mikrosteuereinheit (40) im Speicher rampenartige Wellenformen enthält, die bei der Erregung des Motors ansteigend und bei seiner Desaktivierung absteigend verlaufen, was durch fortschreitende Vergrößerung bzw. Verkleinerung des Tastverhältnisses erfolgt, das an die Steuerelektroden der Leistungstransistoren eines Zerhackers (64) für die Stromversorung des Elektromotors angelegt wird.

FIG.1

FIG.2

FIG.3

EP 0 518 716 B1

FIG.8

FIG.4

FIG.5

FIG.7

COMMANDE 175

FIG.9

DOUB

+BAT

M+

FIG.10

INVERSEURS

VERS MICRO-
CONTROLEUR 40
(CONVERSION A/N)

FIG. 6

FIG. 11

FIG. 15

+REG    +AP    +REG    230

233    236    240    241    242

232    237

μP(An)    235    234    238    239    μP(M&E)

231

FIG.12

AM

5    246    247    250

248    245    CAPTEUR
DECONNECTE

249

0    CAPTEUR
COURT CIRCUIT

FIG.13

BOB

FIG.14

DOUB    +AP

REG

FIG.16

FIG.17